# EUROPÄISCHE PATENTSCHRIFT

(11) **EP 1 736 765 B1**
(45) Veröffentlichungstag und Bekanntmachung des Hinweises auf die Patenterteilung: **20.08.2008**
(21) Anmeldenummer: 06012208.2
(22) Anmeldetag: 14.06.2006
(51) Int. Cl.: G01N 27/90

(54) **Wirbelstrom-Prüfsonde für die Wirbelstromprüfung einer Durchführung eines Reaktordruckbehälterdeckels eines Kernreaktors**
Eddy current test probe for eddy current testing of a lead-through duct of a reactor pressure vessel cover of a nuclear reactor
Sonde de test à courant de Foucault pour le test du courant Foucault de la traversée d'un couvercle de caisson sous pression d'un réacteur nucléaire

(30) Priorität: 22.06.2005 DE 102005028858
(43) Veröffentlichungstag der Anmeldung: 27.12.2006
(73) Patentinhaber: intelligeNDT Systems & Services GmbH & Co. KG, 91058 Erlangen (DE)
(72) Erfinder: Pöpperl, Dieter-Nikolaus, 91074 Herzogenaurach (DE)
(74) Vertreter: Mörtel & Höfner

(56) Entgegenhaltungen:
- EP-A- 0 569 617
- EP-A- 0 801 304
- DE-A1- 2 037 787
- DE-A1- 2 641 798
- DE-C1- 4 330 909
- US-A1- 2005 062 470

## Beschreibung

Die Erfindung bezieht sich auf eine Wirbelstrom-Prüfsonde für die Wirbelstromprüfung einer Durchführung eines Reaktordruckbehälterdeckels eines Kernreaktors, wie sie beispielsweise aus der EP 0 569 617 B1 bekannt ist.

In den Reaktordruckbehälterdeckel eines Druckwasserkernreaktors sind eine Vielzahl von zylindrischen Durchführungen für den Antrieb von Steuerelementen eingeschweißt. Diese zylindrischen Durchführungen oder Stutzen sind von einer an ihm abgestützten Hülse unter Belassung eines Ringspaltes durchsetzt. Diese Hülse ragt in den gewölbten Innenraum des Druckbehälterdeckels hinein, wobei je nach Bauart auch die Durchführung in diesen Innenraum hineinragen kann.

Zum Prüfen der Schweißnaht, mit der die Durchführungen im Reaktordruckbehälterdeckel eingeschweißt sind, ist aus der EP 0 569 617 B1 eine Einrichtung bekannt, bei der eine an einem freien Ende einer Lanze oder eines Schwertes angeordnete Wirbelstrom-Prüfsonde in den Ringspalt zwischen Hülse und Durchführung eingefahren wird und die Innenoberfläche der Durchführung in den kritischen Bereichen mäanderförmig umfährt.

Aus US 2005/062470 ist eine Wirbelstrom-Prüfsonde bekannt, mit einem am freien Ende einer Lanze angeordneten flachen Sondenkopf, in dem Spulen angeordnet sind, und dessen eine Flachseite eine konvexe und dessen dieser gegenüberliegende Flachseite eine konkave Wölbung aufweisen.

Anlagenspezifisch können jedoch Ringspalte auftreten, die aufgrund nicht exakt koaxialer Ausrichtung von Hülse und Durchführung oder bauartbedingt extrem schmal sind und Spaltbreiten aufweisen können, die etwa in der Größenordnung von 1,4 mm liegen, wobei die zu prüfende Schweißnaht in einer Entfernung von bis zu 1 m vom zugänglichen Ende der Durchführung liegen kann.

Der Erfindung liegt nun die Aufgabe zugrunde, eine Wirbelstrom-Prüfsonde für die Wirbelstrom-Prüfung einer Durchführung eines Reaktordruckbehälterdeckels eines Kernreaktors anzugeben, die auch in enge Ringspalte eingeführt werden kann.

Die genannte Aufgabe wird gemäß der Erfindung gelöst mit einer Wirbelstrom-Prüfsonde mit den Merkmalen des Patentanspruchs 1. Gemäß diesen Merkmalen enthält die Wirbelstrom-Prüfsonde einen am freien Ende einer Lanze angeordneten flachen Sondenkopf, in dem wenigstens zwei Spulen angeordnet sind, und dessen eine Flachseite eine konvexe und dessen dieser gegenüber liegende Flachseite eine konkave Wölbung aufweisen, deren Krümmungsradien dem Innenradius der Durchführung entsprechen. Da die Wirbelstrom-Prüfsonde sowohl auf ihrer Vorder- als auch auf ihrer Rückseite der Geometrie des Ringspalts angepasst ist, ist es möglich, den verfügbaren Ringspalt weitgehend für die zur Unterbringung der Spulen erforderlichen Bauhöhe des Sondenkopfes auszunutzen.

Eine besonders niedrige Bauhöhe wird erzielt, wenn der Sondenkopf einen Gehäuserahmen umfasst, in den ein Isolierkörper eingesetzt ist, in dem die Spulen angeordnet sind.

Gemäß der Erfindung ist an der Flachseite mit der konkaven Wölbung (Rückseite) ein Federelement zum Abstützen an einer in der Durchführung unter Belassung eines Ringspalts gelagerten Hülse angeordnet. Durch diese Maßnahme ist sichergestellt, dass die Vorderseite des Sondenkopfes auch dann möglichst spielfrei an der Innenoberfläche der Durchführung anliegt, wenn die Breite des Ringspaltes beispielsweise durch nicht exakt koaxiale Anordnung der Hülse variiert.

Wenn der Isolierkörper aus einem keramischen Werkstoff besteht, wird eine besonders hohe Abriebfestigkeit erzielt.

In einer weiteren bevorzugten Ausgestaltung der Erfindung verläuft die Verbindungslinie der Mittenachsen der Spulen unter 45° zur Längsachse der Lanze. Durch diese Maßnahme können bei einer Differenzschaltung der Spulen mit besonders hoher Empfindlichkeit Fehler nachgewiesen werden, die längs oder quer zu einer in Umfangsrichtung der Durchführung verlaufenden Schweißnaht orientiert sind, wobei außerdem eine Unterscheidung zwischen solchen Längs- und Querfehlern möglich ist.

Die Einführbarkeit des Sondenkopfes in den Längsspalt lässt sich besonders einfach bewerkstelligen, wenn die Lanze ein flaches Band ist.

Wenn der Isolierkörper an seiner Rückseite eine Abschirmung aus einem µ-Metall aufweist, hat die Hülse praktisch keinen Einfluss auf das Messsignal.

Eine besonders hohe Messempfindlichkeit wird erzielt, wenn die Spulen durch einen mehrlagig auf eine zylindrischen Spulenkörper gewickelten Draht gebildet sind.

Zur weiteren Erläuterung der Erfindung wird auf das Ausführungsbeispiel der Zeichnung verwiesen. Es zeigen:
- Fig. 1: eine Draufsicht auf eine Flachseite einer Wirbelstrom-Prüfsonde gemäß der Erfindung,
- Fig. 2: eine Draufsicht auf die Stirnseite der Wirbelstrom-Prüfsonde,
- Fig. 3: eine Draufsicht auf eine Schmalseite der Wirbelstrom-Prüfsonde,
- Fig. 4: einen Querschnitt durch den am freien Ende der Lanze angeordneten Sondenkopf.

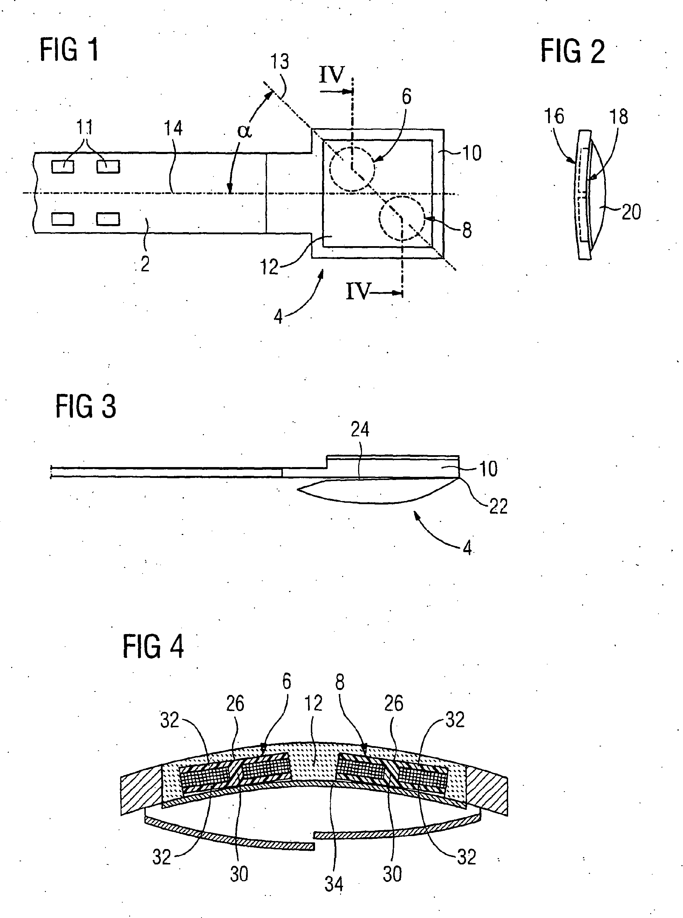

Gemäß Fig. 1 umfasst die Wirbelstrom-Prüfsonde eine flache, bandförmige Lanze 2, an deren freiem Ende ein flacher Sondenkopf 4 angeordnet ist. Im Sondenkopf 4 befinden sich zwei zylindrische Spulen 6,8, die in der Draufsicht nicht sichtbar sind und deshalb nur gestrichelt angedeutet sind. Der Sondenkopf 4 umfasst einen Gehäuserahmen 10 aus Stahl, in den ein keramischer Isolierkörper 12 eingesetzt ist, in dem die Spulen 6,8 angeordnet sind. Die Lanze 2 ist aus zwei Blechen zusammengesetzt, zwischen denen ein in der Figur nicht erkennbarer Hohlraum belassen ist, in dem die elektrischen Anschlussleiter für die Spulen 6,8 verlaufen. In der Lanze 2 angeordnete Perforationslöcher 11 dienen zum formschlüssigen Antrieb der Lanze 2, um den Sondenkopf 4 in einen engen Ringspalt einführen zu können.

Die Spulen 6,8 sind in dem in den rechteckigen Gehäuserahmen 10 eingesetzten Isolierkörper 12 derart angeordnet, dass die Verbindungslinie 13 zwischen ihren senkrecht zur Zeichenebene verlaufenden Mittenachsen unter einem Winkel α = 45° zur Längsachse 14 der Lanze verläuft.

In der Ansicht gemäß Fig. 2 ist zu erkennen, dass der Sondenkopf 4 an seinem gegenüberliegenden Flachseiten 16,18 konvex bzw. konkav gewölbt ist. Die Krümmungsradien dieser Wölbungen entsprechen dabei dem Innenradius der zu prüfenden Durchführung. Die konvex gekrümmte Flachseite 16 bildet die Vorderseite des Sondenkopfes und legt sich an den Innenumfang der Durchführung an. Um ein möglichst spaltfreies Anlegen zu ermöglichen,_ist auf der Flachseite 18 - der Rückseite - ein konvex gebogenes Federelement 20 angeordnet, das ermöglicht, den Sondenkopf 4 auch in Ringspalte mit größerer Spaltbreite einzusetzen. Durch die konvex gekrümmte Gestalt der Feder 20 kann diese bei besonders engen Ringspalten eine konkave Form annehmen, die sich an die Rückseite des Sondenkopfes 4 anschmiegt.

In Fig. 3 ist zu erkennen, dass die Feder auch in Längsrichtung der Lanze 2 eine konvexe Wölbung aufweist. Die Feder 20 hat die Gestalt einer gewölbten Zunge und ist nur an der Vorderkante 22 und nicht an ihren seitlichen Rändern 24 am Gehäuserahmen 10 fixiert, insbesondere mit einem Laserschweißverfahren mit diesem verschweißt.

Gemäß Fig. 4 sind die Spulen 6,8 in hohlzylindrische Vertiefungen 26 des aus einer Keramik bestehenden Isolierkörpers 12 eingesetzt und dort verklebt. Die Spulen 6,8 umfassen einen zylindrischen Spulenkörper 30, der an seinen Stirnseiten jeweils mit flanschartigen Scheiben 32 versehen ist. Um den Spulenkörper 30 ist in mehreren Lagen ein Lackdraht gewickelt. Die typische Bauhöhe einer Spule 6,8 beträgt im Ausführungsbeispiel etwa 0,8 mm. Auf die konkav gewölbte Flachseite, d.h. die Rückseite des Isolierkörpers 12 ist eine Folie 34 aus µ-Metall aufgeklebt, die als Abschirmung dient und den Einfluss der Hülse auf das Messsignal praktisch eliminiert.

## Patentansprüche

1. Wirbelstrom-Prüfsonde für die Wirbelstromprüfung einer Durchführung eines Reaktordruckbehälterdeckels eines Kernreaktors, mit einem am freien Ende einer Lanze (2) angeordneten flachen Sondenkopf (4), in dem wenigstens zwei Spulen (6,8) angeordnet sind, und dessen eine Flachseite (16) eine konvexe und dessen dieser gegenüberliegende Flachseite (18) eine konkave Wölbung aufweisen, deren Krümmungsradien dem Innenradius der Durchführung entsprechen, **gekennzeichnet dadurch, dass** an der Flachseite mit der konkaven Wölbung (18) ein Federelement (20) zum Abstützen an einer in der Durchführung unter Belassung eines Ringspaltes gelagerten Hülse angeordnet ist.

2. Wirbelstrom-Prüfsonde nach Anspruch 1, dessen Sondenkopf (4) einen Gehäuserahmen (10) umfasst, in den ein Isolierkörper (12) eingesetzt ist, in dem die Spulen (6,8) angeordnet sind.

3. Wirbelstrom-Prüfsonde nach einem der vorhergehenden Ansprüche, bei der der Isolierkörper (12) aus einem keramischen Werkstoff besteht.

4. Wirbelstrom-Prüfsonde nach einem der vorhergehenden Ansprüche, bei der die Verbindungslinie der Mittenachsen der Spulen (6,8) unter 45° zur Längsachse (14) der Lanze (2) verläuft.

5. Wirbelstrom-Prüfsonde nach einem der vorhergehenden Ansprüche, bei der die Lanze (2) ein flaches Band ist.

6. Wirbelstromprüfsonde nach einem der vorhergehenden Ansprüche, bei der der Isolierkörper (12) an seiner Rückseite mit einer Abschirmung aus einem µ-Metall versehen ist.

7. Wirbelstromprüfsonde nach einem der vorhergehenden Ansprüche, bei der die Spulen (6,8) durch einen mehrlagig auf einen zylindrischen Spulenkörper (30) gewickelten Draht gebildet sind.

## Claims

1. Eddy current test probe for eddy current testing of a lead-through duct of a reactor pressure vessel cover of a nuclear reactor, having a flat probe head (4) which is arranged at the free end of a lance (2) and in which at least two coils (6, 8) are arranged, one flat side (16) of said probe head having a convex curvature and that flat side (18) of said probe head which is opposite said side (16) having a concave curvature, the radii of curvature of which correspond to the inside radius of the lead-through duct, **characterized in that** a spring element (20) is arranged on the flat side with the concave curvature (18) and is intended to be supported on a sleeve which is mounted in the lead-through duct so as to leave an annular gap.

2. Eddy current test probe according to Claim 1, the probe head (4) of which comprises a housing frame (10) in which an insulating body (12), in which the coils (6, 8) are arranged, is inserted.

3. Eddy current test probe according to one of the preceding claims, in which the insulating body (12) is composed of a ceramic material.

4. Eddy current test probe according to one of the preceding claims, in which the connecting line of the centre axes of the coils (6, 8) runs at 45° to the longitudinal axis (14) of the lance (2).

5. Eddy current test probe according to one of the preceding claims, in which the lance (2) is a flat band.

6. Eddy current test probe according to one of the preceding claims, in which the insulating body (12) is provided with a µ-metal screen on its rear side.

7. Eddy current test probe according to one of the preceding claims, in which the coils (6, 8) are formed by a wire which is wound in multiple layers onto a cylindrical coil former (30).

## Revendications

1. Sonde de test à courants de Foucault pour le contrôle de courants de Foucault d'une traversée d'un couvercle de cuve sous pression d'un réacteur nucléaire, comprenant une tête ( 4 ) plate de sonde, qui est montée à une des extrémités libres d'une lance ( 2 ), dans laquelle sont disposées au moins deux bobines ( 6, 8 ) et dont une face ( 16 ) plate a une courbure convexe et dont la face ( 18) plate qui lui est opposée a une courbure concave dont les rayons de courbure correspondent au rayon intérieur de la traversée, **caractérisée en ce que,** sur la face plate ayant la courbure ( 18 ) concave, est disposé un élément ( 20 ) à ressort destiné à s'appuyer sur un manchon monté dans la traversée en laissant une fente annulaire.

2. Sonde de test à courant de Foucault suivant la revendication 1, dont la tête ( 4 ) de sonde comprend un cadre ( 10 ) de boîtier, dans lequel est insérée une pièce ( 12 ) isolante dans laquelle les bobines ( 6, 8 ) sont disposées.

3. Sonde de test à courant de Foucault suivant l'une des revendications précédentes, dans laquelle la pièce ( 12) isolante est en un matériau céramique.

4. Sonde de test à courant de Foucault suivant l'une des revendications précédentes, dans laquelle la ligne de liaison des axes médians des bobines ( 6, 8 ) fait un angle de 45° avec l'axe ( 14 ) longitudinal de la lance ( 2 ).

5. Sonde de test à courant de Foucault suivant l'une des revendications précédentes, dans laquelle la lance ( 2 ) est une bande plate.

6. Sonde de test à courant de Foucault suivant l'une des revendications précédentes, dans laquelle la pièce ( 12 ) isolante est dotée sur sa face arrière d'un blindage en un métal u.

7. Sonde de test à courant de Foucault suivant l'une des revendications précédentes, dans laquelle les bobines ( 6, 8 ) sont formées d'un fil métallique enroulé en plusieurs couches sur un corps ( 30 ) cylindrique de bobine.
